# EUROPÄISCHE PATENTSCHRIFT

(11) **EP 1 017 760 B1**
(45) Veröffentlichungstag und Bekanntmachung des Hinweises auf die Patenterteilung: **20.11.2002**
(21) Anmeldenummer: 98947463.0
(22) Anmeldetag: 27.08.1998
(51) Int. Cl.: C10C 3/02, C08L 95/00, E01C 7/18, E01C 7/26, C10C 3/00

(54) **BITUMEN ODER ASPHALT ZUR HERSTELLUNG VON STRASSENBELAG, STRASSENBELAG, VERFAHREN ZUR HERSTELLUNG VON BITUMEN ODER ASPHALT**
BITUMEN OR ASPHALT FOR PRODUCING A ROAD TOPPING, ROAD TOPPING AND METHOD FOR THE PRODUCTION OF BITUMEN OR ASPHALT
BITUME OU ASPHALTE POUR REALISATION DE TAPIS ROUTIER, TAPIS ROUTIER AINSI REALISE ET PROCEDE DE PRODUCTION DE BITUME OU D'ASPHALTE

(30) Priorität: 29.08.1997 DE 19737755; 23.12.1997 DE 19757553; 12.06.1998 DE 19826144; 26.08.1998 DE 19838770
(43) Veröffentlichungstag der Anmeldung: 12.07.2000
(60) Teilanmeldung: 02014129.7
(73) Patentinhaber: Schümann Sasol GmbH, 20457 Hamburg (DE)
(72) Erfinder: HILDEBRAND, Günter, D-06729 Rehmsdorf (DE); RICHTER, Ferdinand, D-22549 Hamburg (DE); MATTHÄI, Michael, D-24558 Henstedt-Ulzburg (DE); IVERSEN, Bruno, D-22607 Hamburg (DE); DAMM, Klaus-Werner, D-21244 Buchholz (DE)
(74) Vertreter: Müller, Enno, Dipl.-Ing.
(86) Internationale Anmeldenummer: EP9805438
(87) Internationale Veröffentlichungsnummer: WO99011737

(56) Entgegenhaltungen:
- BE-A- 495 562
- DD-A- 208 164
- DE-A- 2 250 694
- DE-C- 400 058
- FR-A- 772 201
- GB-A- 2 037 299
- US-A- 4 242 143

## Beschreibung

Die Erfindung betrifft zunächst Bitumen oder Asphalt zur Herstellung von Straßenbelag.

Straßenbelag wird in sehr großem Umfang als Asphalt oder einem Gemenge von Bitumen mit Zuschlagstoffen, wie Sand, Kies, Splitt (rund oder gebrochen) oder dergleichen hergestellt.

Bei einem Straßenbelag wird angestrebt, dass ein hoher Verschleißwiderstand gegeben ist. Weiter soll eine Verformungsneigung gering sein, damit möglichst keine, geringe bez. erst nach langer Benutzungsdauer Unebenheiten wie Spurrillen oder dergleichen auftreten.

Im Stand der Technik ist es aus der FR 772 201 A bekannt, Asphaltöl Paraffin beizugeben. Asphaltöl ist dazu bestimmt, beim Bau von Straßendecken die mineralischen Gesteine zu umhüllen. Produkte auf Mineralölbasis, wie etwa Hauptparaffin, können aber, wenn überhaupt, nur eine unbedeutende adhäsive Wirkung ausüben. Sie sind daher bei diesem vorbekannten Gegenstand als Lösevermittler zwischen dem Asphaltöl und den Lösemitteln (Kerosin, Kreosote) eingesetzt. Im Hinblick auf Verschleißwiderstand und geringe Verformungsneigung bei Belastung hat das Paraffin bei diesem vorbekannten Gegenstand keine Bedeutung.

Zum Stand der Technik ist auch auf die DE 400 058 C zu verweisen. Hieraus ist es bekannt, Rohmontanwachs zu Teeren hinzuzugeben. Der Anteil an Rohmontanwachs kann 1 bis 5 % betragen. Darüber hinaus ist auch die Zugabe von Paraffin genannt, jedoch hinsichtlich einer Verbesserung der Elastizität. Die DD 208164 A betrifft gleichfalls die Zumischung von Montanwachsen zu Bitumen. Es soll eine hohe Wärmestandfestigkeit bei gleichzeitig gutem Formänderungsvermögen erreicht werden. Die dort wiedergegebenen Ergebnisse bedingen jedoch einen hohen Anteil an Rohmontanwachs, bei noch nicht zufriedenstellenden Verbesserungen.

Die Erfindung beschäftigt sich, ausgehend von dem zunächst genannten Stand der Technik, mit der technischen Problematik, ein verbessertes Bitumen oder Asphalt, insbesondere zur Herstellung von Straßenbelag anzugeben.

Diese technische Problematik ist zunächst und im wesentlichen beim Gegenstand des Anspruches 1 gelöst, wobei darauf abgestellt ist, daß das Bitumen oder der Asphalt einen Anteil von durch eine Fischer-Tropsch-Synthese gewonnenem Paraffin (FT-Paraffin) enthält. FT-Paraffine bestehen vornehmlich nur aus Normal-Paraffinen. Mehr als 90 % sind gewöhnlich N-Alkane. Der Rest sind ISO-Alkane. Die Kettenlänge liegt bei C 30 bis etwa C 100, bei einer Gradation (Erstarrungspunkt, EP) von ca. 68 bis ca. 105°C. Der Anteil von FT-Paraffin beträgt, bezogen auf einen Bitumenanteil des Asphalts oder bezogen auf Bitumen als solches, vorzugsweise 0,5 % oder mehr. Diese Prozentangaben werden in der Praxis auf die Masse bezogen. Man kann aber auch von Volumenprozent ausgehen. Überraschend hat sich herausgestellt, daß ein Straßenbelag, der mit solcherart modifiziertem Bitumen oder Asphalt hergestellt wird, wesentlich standfester ist. Die Ausbildung von Spurrillen bei den üblichen, im Straßenverkehr durch Kraftfahrzeuge gegebenen Belastungen ist gegenüber herkömmlichen Straßenbelägen auf Bitumen- oder Asphalt-Basis deutlich reduziert. Die Festigkeit eines Straßenbelages ist von verschiedenen, ineinandergreifenden Faktoren abhängig. Unter anderem insbesondere von dem Verdichtungsgrad. Hier hat sich überraschend herausgestellt, daß die Zugabe von FT-Paraffin eine deutlich höhere Verdichtung ermöglicht. Obwohl die FT-Paraffine letztlich zu einer härteren Ausbildung des Straßenbelages führen, setzen sie im flüssigen Zustand zugleich die Viskosität des "Bindematerials", also des Bitumens, herab. Sie wirken gleichsam als "Verflüssiger". Weiter kommt dem verwendeten Splitt, rund oder gebrochen, eine Bedeutung hinsichtlich der Festigkeit der Straßendecke zu. Bei gebrochenem Splitt lassen sich -was auf die Verzahnung der einzelnen Splittkörner zurückgeführt wird- hohe Festigkeiten erreichen. Bei nicht gebrochenem, rundem Splitt oder Kies läßt sich jedoch eine bessere Verdichtung erreichen. Auch in diesem Zusammenhang hat der Zusatz von FT-Paraffinen vorteilhafte Auswirkungen. Das Haftvermögen von Bitumen an dem Gestein, wie eben Splitt oder Kies, wird verbessert. Eine besonders deutliche Verbesserung kann man erreichen, wenn man -zumindest teilweise- oxydierte FT-Paraffine einsetzt. Der Erstarrungspunkt fällt hierbei zwar um ca. 5° im Vergleich zu nicht oxydierten FT-Paraffinen; jedoch wird das genannte Haftvermögen deutlich verbessert, so daß der Einsatz von rundem Kies oder Splitt, zumindest zu einem gewissen Anteil, ermöglicht ist, ohne daß Einbußen an der Festigkeit hingenommen werden müssen. Die vorteilhafte Wirkung von oxydierten FT-Paraffinen wird auf die hierbei gegebenen funktionellen Gruppen (Polarität) zurückgeführt.

Im praktischen Einsatzfall beträgt der Anteil an FT-Paraffinen im Bereichen von 0,5 bis 10, bevorzugt im Bereich von 2,5 bis 7,5, und weiter bevorzugt etwa 4 bis 5 Massen-Prozent, bezogen auf das Bitumen. Hinsichtlich der FT-Paraffine ist ein bevorzugter Einsatzbereich bei solchen eines Erstarrungspunktes von 90 bis etwa 105°C.

Während normaler Asphalt, in einer Ausführung als Walzasphalt, etwa 3-8 % Bitumen enthält, wird auch sogenannter Guß-Asphalt hergestellt, der ca. 6,5 bis 8,5 % Bitumen enthält. Es werden hier üblicherweise Bitumenqualitäten von B45 oder höher eingesetzt. Um beim Transport von Gußasphalt ein Absetzen der mineralischen Bestandteile zu verhindern, ist es erforderlich, bis zur endgültigen Verarbeitung ein ständiges Umrühren durchzuführen. Um die Viskosität für ein solches Umrühren niedrig zu halten, wird der Gußasphalt relativ hoch temperiert, nämlich auf 200 bis 250°C. Die Zugabe von FT-Paraffinen, wie zuvor erläutert, in etwa gleichem Verhältnis zu dem Gußasphalt (bzw. dem Bitumen des Gußasphalts) führt nun überraschend dazu, daß die Temperatur, welche erforderlich ist, um die Mischung rührfähig zu halten, deutlich abgesenkt werden kann. Während bislang Temperaturen von mindestens 220 bis 250°C erforderlich waren, ist beim Zusatz der FT-Paraffine eine Reduzierung um 30°C möglich. Diese Herabsetzung der Temperaturen ist zugleich mit dem erheblichen Vorteil verbunden, daß eine Schadstoffabgabe verringert wird.

Bei Asphalt, wie Gußasphalt oder auch Walzasphalt, hat sich im übrigen herausgestellt, daß eine deutlich längere Zeit zur Be- bzw. Verarbeitung des Asphalts verbleibt. Überraschend hat sich gezeigt, daß die Verarbeitung von solchem Asphalt auch bei geringeren Temperaturen als bislang möglich war. Dieser Effekt wird neben der bereits beschriebenen Viskositätsminderung auch auf einen Latentwärme-Speichereffekt des Paraffins zurückgeführt. Bei der Phasenumwandlung des Paraffins erfolgt eine Wärmefreisetzung ohne Temperaturrückgang.

Im weiteren betrifft die Erfindung auch einen Straßenbelag, bestehend aus einer unteren Sand-/Kies-Schicht (Frostschutzschicht), einer darüber befindlichen bituminösen Tragschicht, einer Asphalt-Binderschicht und einer Asphalt-Betonschicht, allgemeiner ausgedrückt einer Asphalt-Deckschicht. Bezüglich eines solchen Straßenbelages beschäftigt sich die Erfindung mit der technischen Problematik, eine höhere Standfestigkeit, insbesondere im Hinblick auf eine Verformungsfestigkeit, zu erreichen.

Diese technische Problematik ist bezüglich des Straßenbelages zunächst und im wesentlichen dadurch gelöst, daß das Bitumen der Asphalt-Deckschicht und/oder der bituminösen Tragschicht einen Anteil an FT-Paraffinen enthält. Vorzugsweise ist der Anteil von FT-Paraffinen im Bereich von 0,5 bis 10, bzw. weiter bevorzugt 2,5 bis 7,5 %, bezogen auf die Masse. Man kann hier aber auch von Volumenprozenten ausgehen.

Wenn es auch nicht immer als erforderlich angesehen wird, so liegt es doch im Rahmen der Erfindung, wie angegeben, die obere Deckschicht, d. h. die Asphalt-Deckschicht, durch Zugabe von FT-Paraffinen zu modifizieren. In der Tat hat sich sogar herausgestellt, daß die Zugabe von 1 bis 3 % FT-Paraffinen zu der Asphalt-Deckschicht eine höhere Festigkeit, insbesondere aufgrund höherer Verdichtungsmöglichkeiten, erreichen läßt. Neuere Erkenntnisse weisen sogar darauf hin, daß die Zugabe von FT-Paraffinen zu der Asphalt-Deckschicht am wesentlichsten ist hinsichtlich der einzelnen Schichten eines Straßenbelages.

Bezüglich der FT-Paraffine handelt es sich in diesem Zusammenhang um FT-Paraffine mit einem EP von 68 bis 105°C, bevorzugt in Kettenlängen von C30 bis C100 oder sogar C105. Die obigen Ausführungen, insbesondere auch im Hinblick auf oxydierte FT-Paraffine, sind hier in gleicher Weise zutreffend.

Die Erfindung beschäftigt sich auch mit einem Verfahren zur Herstellung eines Straßenbelages, unter dem Gesichtspunkt der technischen Problematik, eine höhere Standfestigkeit zu erreichen.

In dieser Hinsicht schlägt die Erfindung vor, daß einer Asphaltmischung zur Ausbildung einer bituminösen Tragschicht und/oder einer Asphalt-Binderschicht und/oder einer Asphalt-Deckschicht im Straßenbau Bitumen zugemischt wird mit einem Anteil von 0,5 bis 10 %, vorzugsweise 2,5 bis 7,5 %, weiter bevorzugt 4-5 %, geeigneterweise Massenprozent, an FT-Paraffinen. Vorzugsweise erfolgt die Zugabe der FT-Paraffine zum flüssigen Bitumen oder zum Asphalt in fester oder flüssiger Form.
Die FT-Paraffine können hierbei in Bezug auf eine feste Form etwa als Granulat, Pulver, Flakes oder Pastillen vorliegen. Bei der Flakes-Form ist ein flockenartiges Substrat gegeben. Weiter bevorzugt erfolgt die Zumischung zu dem Bitumen oder dem Asphalt bei einer Bitumentemperatur von etwa 160 bis 170°C. Dem somit modifizierten Bitumen werden sodann die Zuschlagstoffe, wie Stein, Kies oder Splitt, zugegeben.

Insgesamt hat sich gezeigt, daß ein derartiges Bitumen einen höheren Erweichungspunkt aufweist, bei niedriger Penetration. Die Penetration ist sogar geringfügig niedriger als zu erwarten gewesen wäre. Der Erweichungspunkt steigt stärker als die Penetration abfällt. Eine Entmischung konnte nicht festgestellt werden. Das derartig modifizierte Bitumen ist vorteilhaft lagerstabil. Zugleich ergibt sich ein verbessertes Haftverhalten bei etwa gleichem Brechpunkt im Vergleich zu herkömmlichen Bitumen. Eine entsprechende Verbesserung ergibt sich dann, wie auch ausgeführt, in der mit solchen Bitumen geschaffenen Asphaltmischung. Das Tieftemperatur-Verhalten verschlechtert sich überraschenderweise nicht. Es wird vielmehr von dem verwendeten Grundbitumen bestimmt.

Gegenstand der Erfindung ist auch ein Verfahren zur Ausbildung einer Straßendecke mit Anteilen von Alt-Asphalt einer abgetragenen Straßendecke und Anteilen an Neu-Asphalt, wobei der Alt-Asphalt zunächst auf eine Temperatur erwärmt wird, die niedriger ist als die Temperatur des Neu-Asphalts und die Anteile von Alt-Asphalt und Neu-Asphalt sodann vermischt werden. Bei einem derartigen Verfahren schlägt die Erfindung vor, daß dem Neu-Asphalt, oder gegebenenfalls dem Alt-Asphalt, FT-Paraffin zugegeben wird. Überraschenderweise läßt sich hiermit ein besserer Aufschluß des Alt-Asphalts erreichen. Der Alt-Asphalt wird nur so weit erwärmt, daß keine Verflüssigung eintritt. Die Verflüssigung und Vermischung mit dem Neu-Asphalt tritt vielmehr erst aufgrund der Zugabe des Neu-Asphalts und der wesentlich höheren Temperatur des Neu-Asphalts ein. Dadurch, daß dem Neu-Asphalt FT-Paraffin zugegeben wird, verflüssigt sich der Neu-Asphalt stärker und es kommt so zu einer innigeren Vermischung und damit schnelleren temperaturmäßigen Aufschließung des Alt-Asphalts. Die FT-Paraffine werden in diesem Zusammenhang bevorzugt in einem Anteil von 0,1 bis 0,5 %, bei einem durchgeführten Beispielsfall etwa mit 0,25 %, jeweils geeigneterweise Massenprozent, bezogen auf eine Einsatzmenge des Neu-Asphalts, beigegeben.

### Beispiele:

### Beispiel 1:

Es wurde Straßenbaubitumen B 100 mit 2,5, 5 und 7,5 Vol.-% FT-Paraffinen hergestellt. Die FT-Paraffine wurden mit einem Flügelrührwerk bei 160° C in das Bitumen eingerührt.

Hierbei ergaben sich folgende Werte:

| | | | | | |
|---|---|---|---|---|---|
| | Einheiten | B100 | B100+2,5% FT-Paraffin | B100+5,0% FT-Paraffin | B100+7,5% FT-Paraffin |
| Erweichungspunkt | °C Badflüssigkeit | 44.5 Wasser | 75,5 Wasser | 94,5 Glyzerin | 101,0 Glyzerin |
| Penetration bei 25 ° C | mm/10 | 89 | 57 | 44 | 41 |
| Brechpunkt n. Fraass | °C | -14,5 | -13,0 | -12.0 | -10,0 |
| Thermische Stabilität | °C | 0,5 | 1,5 | 1,5 | |

| Haftverhalten (ÖNORM B3682) +40°C Wasserlagerung Bedeckung der Oberfläche | | | | | |
|---|---|---|---|---|---|
| dolomitscher Kalk | | | | | |
| 24 Stunden | % | 100 | 100 | 100 | 100 |
| 48 Stunden | % | 100 | 100 | 100 | 100 |
| | | | | | |
| Dolomit 24 Stunden | % | 95 | 100 | 100 | 100 |
| 48 Stunden | % | 95 | 100 | 100 | 100 |
| | | | | | |
| Granulit 24 Stunden | % | 100 | 100 | 100 | 100 |
| 48 Stunden | % | 95 | 100 | 100 | 100 |
| | | | | | |
| Granit 24 Stunden | % | 90 | 100 | 100 | 100 |
| 48 Stunden | % | 85 | 100 | 100 | 100 |
| Masseänderung nach RTFOT (ASTM D2872-88) | % | <0,1 | <0,1 | <0,1 | <0,1 |
| | | | | | |
| Erweichungspunkt nach Ring und Kugel | °C | 43,5 | 73,0 | 97,5 | 102,0 |
| nach RTFOT | Badflüssigkeit | Wasser | Wasser | Glyzerin | Glyzerin |
| | | | | | |
| Verminderung des ERK | % | 2,2 | 3,3 | - | - |
| | | | | | |
| Erhöhung des ERK | % | - | - | 3,2 | 1,0 |
| Penetration bei 25 °C nach RTFOT | mm/10 | 62 | 37 | 28 | 26 |
| | | | | | |
| Verminderung der Penetration | % | 30,3 | 35,1 | 36,4 | 36,6 |

Hierzu sei folgendes erläutert:

Der Erweichungspunkt wurde mit Ring und Kugel gemäß der österreichischen Norm(ÖNORM) C 9212 ermittelt. Die Penetration wurde gemäß ÖNORM C9214 bestimmt. Der Brechpunkt nach Fraass wurde gemäß ÖNORM C 9213 ermittelt. Die Thermische Stabilität (Tubentest) wurde gemäß TL-Pmb, Teil 1 (1991) bei + 180° C und 72 Stunden geprüft. Das Haftverhalten wurde gemäß ÖNORM B 3682 an folgenden Gesteinen geprüft:

EBK 8/11 dolomitischer Kalk (Bad Deutsch Altenburg); EBK 8/11 Dolomit (Gaaden) ; EBK 8/11 Granulit (Meiding); EBK 8/11 Granit (Niederschrems).

Die Erhitzungsprüfung "Rolling Thin Film Oven Test" wurde gemäß ASTM D 2872-88 bei 163° C durchgeführt und die Massenänderung, die Veränderung des Erweichungspunktes mit Ring und Kugel und der Penetration bei 25° C bestimmt.

Die Ergebnisse zeigen, daß die Zugabe von FT-Paraffin zu einer Erhöhung des Erweichungspunktes und einer Erniedrigung der Penetration führt. Das Haftverhalten wird durch die Zugabe von FT-Paraffin in Bezug auf Zuschlagstoffe unterschiedlicher Körnung (0-32), wie Granit, Granulit oder dolomitischem Kalk verbessert.

Bei dem zugegebenen FT-Paraffin handelte es sich um FT-Paraffin mit einer aus der Fischer-Tropsch-Synthese gewonnen üblichen Kettenlängenverteilung mit einem Maximum bei C40 bis etwa C60.

### Beispiel 2:

Es wurde ein Straßenbelag, bestehend aus einer Deckschicht und einer Asphalt-Binderschicht hergestellt. Die Asphaltschicht enthielt 2-3 % -bezogen auf das Bitumen- an FT-Paraffinen üblicher Kettenlänge, wie aus der Fischer-Tropsch-Synthese gewonnen.

Es zeigte sich eine deutliche Verlängerung der möglichen Verdichtungszeit der bituminösen Tragschicht von bisher üblichen 0,5 Stunden auf mehr als 2 Stunden aufgrund verbesserten Fließverhaltens durch den Zusatz an FT-Paraffinen. Die Verarbeitung war noch bei Außen-Temperaturen von weniger als 3°C möglich. Auch erhöhte sich der Verdichtungsgrad in der bituminösen Tragschicht wie auch in der Deckschicht. Bspw. sind bislang üblich Verdichtungsgrade von 97 %. Es wurde hier ein Verdichtungsgrad von mehr als 100 % erreicht. Es ergab sich eine wesentliche Erhöhung der Standfestigkeit bei einer erheblichen Reduzierung der Neigung zur Spurrillenbildung.

### Beispiel 3:

Es wurde Gußasphalt hergestellt mit einem Bitumenanteil von 7,5 %. Es wurden FT-Paraffine zu dem Bitumen -bezogen auf die Masse des Bitumens- in einem Anteil von 5 % hinzugegeben. Es ergab sich eine Absenkung der bislang üblichen Verarbeitungstemperatur (Rührtemperatur) von 250 auf 220°C. Trotz abgesenkter Verarbeitungstemperatur wurde aufgrund des Zusatzes von FT-Paraffinen eine Verbesserung des Fließverhaltens erreicht, was zu einer längeren Verarbeitungsdauer des Gußasphalts führte. Es ließ sich auch eine deutliche Absenkung der Emissionswerte bei der Aufbringung des Gußasphalts aufgrund der Temperaturabsenkung feststellen. Insgesamt ergab sich bei der Verarbeitung eine größere Quadratmeterzahl pro Zeiteinheit, da größere Mengen an Asphalt verarbeitet werden konnten, ohne eine Absenkung unter die minimal notwendige Verarbeitungstemperatur befürchten zu müssen.

### Beispiel 4:

Es wurde die Spurbildung an Splittmastixasphalt 0/11 S, B 65 gemessen. Die Bezeichnung "0/11" steht hierbei für eine Gesteinskörnung von 0 bis 11mm. Hierbei wurden die in nachstehender Tabelle aufgeführten Ergebnisse erzielt. Der FT-Paraffingehalt bezieht sich auf das eingesetzte Bitumen (Masse-%).

| FT-Paraffingehalt [%] | Spurtiefe [mm], 40°C | 20.000 Überrollungen 50°C |
|---|---|---|
| 0 | 3,0 | 5,7 |
| 2 | 1,5 | 2,7 |
| 3 | 1,2 | 2,2 |

### Beispiel 5:

Es wurden Vergleichsversuche mit Bitumen B80 und 0, 1,5, 3,0 und 4,5 Masse-% bezogen auf das Originalbindemittel B80 vorgenommen. Hierbei wurden die in nachstehender Tabelle aufgeführten Ergebnisse erzielt.

| | Anteil FT-Paraffin in M.-% | | | |
|---|---|---|---|---|
| Bindemittel | B80 + 0 | B80 + 1,5 | B80 + 3,0 | B80 + 4,5 |
| Erweichungspunkt RuK °C | 48 | 52 | 76 | 96 |
| Penetration 1/10mm | 71 | 48 | 37 | 42 |
| Brechpunkt nach Fraaß °C | -7,5 | -7,5 | -6,5 | -7,5 |
| Aschegehalt % | 0,18 | 0,16 | 0,15 | 0,19 |
| Duktilität, 25°C cm | >100 | >100 | 95 | >100 |
| Dichte, 25°C g/cm³ | 1,0228 | 1,0233 | 1,214 | 1,216 |
| nach thermischer Beanspruchung im rotierenden Kolben, 165°C | | | | |
| Gewichtsänderung % | -0,05 | 0,05 | 0,1 | 0,2 |
| Erweichungspunkt RuK, | | | | |
| Anstieg °C | 3,5 | 9,5 | 5,5 | 0,5 |
| Abfall Penetration % | -25,4 | -24,6 | -16,2 | -21,4 |
| Duktilität, 25°C cm | >100 | >100 | 90 | >100 |
| Viskosität | | | | |
| 110°C | 2300 | 2119 | 1713 | 1593 |
| 130°C | 750 | 600 | 50,4 | 480 |
| 180°C | 95 | 72 | 74 | 64 |
| EVT 100°C | 178°C | 170°C | 166°C | 165°C |

### Beispiel 6:

Es wurden weitere Versuche mit B45, B65 und B80, jeweils mit 4 oder 6% FT-Paraffin, wiederum Masse-% bezogen auf das Ausgangsbindemittel durchgeführt. Zudem wurden zum Vergleich noch entsprechende Werte für ein polymermodifiziertes Bitumen (PmB45A) und ein Bitumen B45 mit 30Masse-% Trinidad Epuré ermittelt. Die Ergebnisse sind in der nachstehenden Tabelle aufgeführt.

Grundsätzlich wurden hierbei folgende allgemeine Erkenntnisse gewonnen.

FT-Paraffin läßt sich in Bitumen bei Temperaturen von 150°C homogen einrühren. Der Übergang vom festen in den flüssigen Zustand, definiert über den Erweichungspunkt RuK wird durch das zugesetzte FT-Paraffin sehr stark angehoben. Liegen die Erweichungspunkte bei den Ausgangsbitumen im Bereich zwischen 50 und 60°C, so steigen sie durch Zusatz von 4Gew.-% FT-Paraffin auf 85 bis 95°C. Im Vergleich dazu nimmt die Penetration nur in geringerem Umfange ab. Es kommt zu einer Viskositätserhöhung im Bereich von 2 Bindemittelstufen (B80 zu B45). Das Verhalten bei tiefen Temperaturen verändert sich bei der Prüfung des Brechpunktes nach Fraaß nur sehr geringfügig und verschiebt sich um maximal 1 Bindemittelstufe. Hieraus ergibt sich somit eine starke Erhöhung der Plastizitätsspanne. Weiterhin läßt sich feststellen, daß die Veränderungen um so deutlicher sind, je weicher das Ausgangsbindemittel gewählt wurde.

| | Erweichungspunkt RuK [°C] | Nadelpenetration [0,1mm] | Brechpunkt n. Fraaß [°C] | ΔT [°K] | Plastizitätsspanne Anstieg | |
|---|---|---|---|---|---|---|
| | | | | | ggü.Bit.o.FT-P. [%] | ggü. PmB45A [%] |
| B45 | 58,5 | 33 | -12 | 70,5 | - | - |
| B45+4% FT-P. | 87,5 | 25 | -10 | 97,5 | 38 | 37 |
| B45+6% FT-P. | 93,5 | 21 | -6 | 99,5 | 41 | 40 |
| B65 | 51,0 | 48 | -8 | 59 | - | - |
| B65+4% FT-P. | 91,0 | 25 | -9 | 100 | 69 | 41 |
| B65+6% FT-P. | 93,5 | 25 | -7 | 110,5 | 70 | 42 |
| B80 | 45,5 | 83 | -11 | 56,5 | - | - |
| B80+4% FT-P. | 83,5 | 50 | -11 | 94,5 | 67 | 33 |
| B80+6% FT-P. | 92,0 | 45 | -8 | 100 | 77 | 41 |
| PmB45A | 58,0 | 38 | -13 | 71 | - | - |
| B45+ Trinidad | 66,0 | 21 | -8 | 74 | - | - |

Nachstehend ist die Erfindung hinsichtlich insbesondere der Herstellung eines Straßenbelages noch anhand beigefügter Zeichnung, die jedoch lediglich Ausführungsbeispiele darstellt, erläutert. Hierbei zeigt:
- Fig. 1: in schematischer Weise eine Schnittdarstellung durch einen Straßenbelag;
- Fig. 2: eine schematische Darstellung der Herstellung von Asphalt;
- Fig. 3: in schematischer Weise eine Schnittdarstellung durch einen weiteren Straßenbelag;
- Fig. 4: eine schematische Darstellung der Herstellung eines Straßenbelages mit einer Mischung aus Alt-Asphalt und Neu-Asphalt.

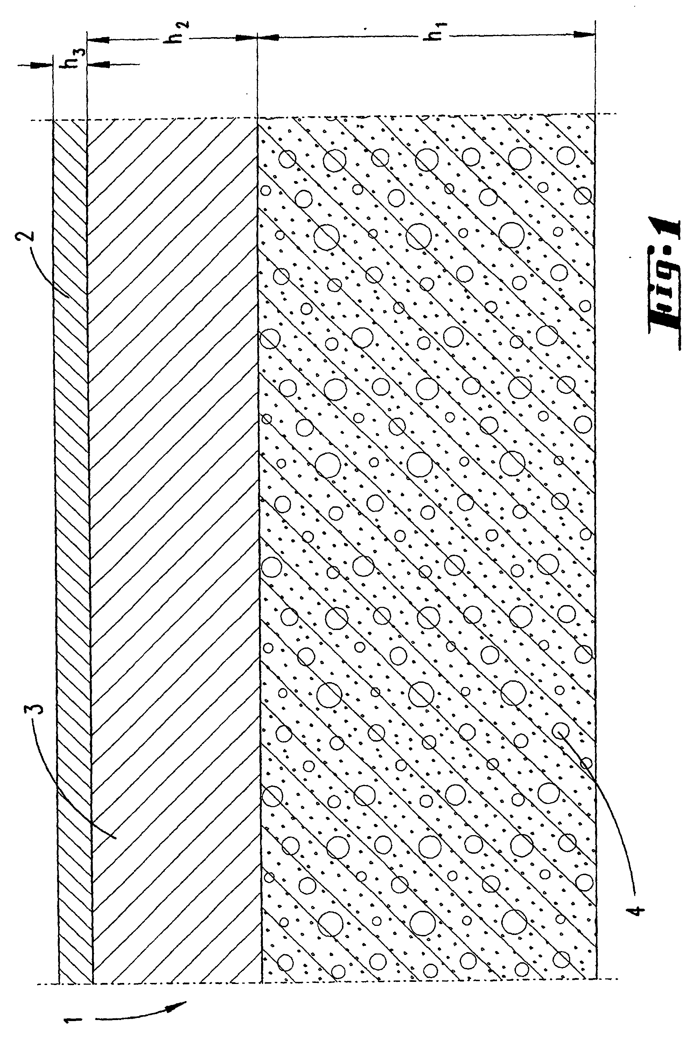

Mit Bezug zu Fig. 1 sei folgendes erläutert.

Der Straßenbelag 1 besteht aus einer oberen Asphalt-Betonschicht, auch als Asphalt-Deckschicht 2 zu bezeichnen, einer mittleren bituminösen Tragschicht 3 und einer unteren Frostschutzschicht 4. Die Frostschutzschicht 4 besteht aus einer Mischung aus Sand und Kies. Sie hat eine Höhe h1 von ca. 40 cm. Die darüber befindliche bituminöse Tragschicht 3 hat eine Höhe h2 von 6 bis 20 cm und die Asphalt-Deckschicht 2 eine solche Höhe h3 von etwa 2 bis 4 cm.

Die bituminöse Tragschicht 3 ist mit einem Bitumen hergestellt, das einen Anteil an FT-Paraffinen von ca. 5 Massen-Prozent aufweist. Das FT-Paraffin hat einen Schmelzpunkt von ca. 100°C und ist durch die Fischer-Tropsch-Synthese erhalten.

Die bituminöse Tragschicht 3 in der angegebenen Zusammensetzung weist eine wesentlich höhere Standfestigkeit auf. Da die Standfestigkeit der bituminösen Tragschicht für das Verformungsverhalten des Straßenbelags, insbesondere die Spurrillenbildung, verantwortlich ist, ist hierüber insgesamt eine wesentlich höhere Lebensdauer erzielt.

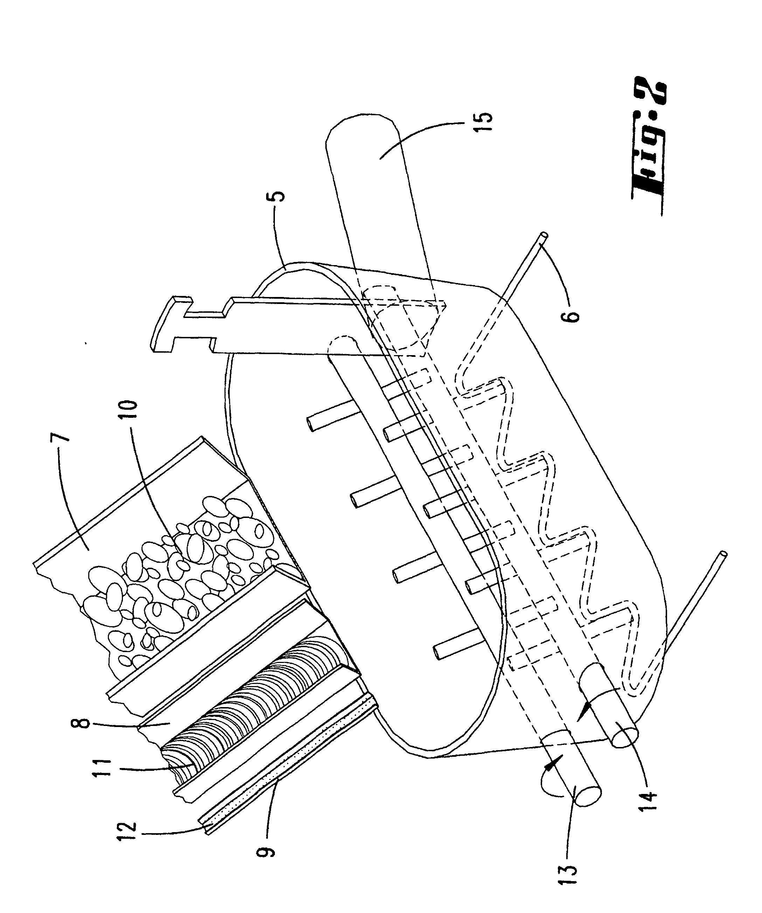

In Fig. 2 ist in schematischer Form ein Behältnis 5 zur Herstellung einer Mischung für eine bituminöse Tragschicht dargestellt. Das Behältnis 5 kann über eine Heizeinrichtung 6 erhitzt werden.

Über Schütten 7, 8 und 9 werden Zuschlagstoffe, wie Kiesel und Sand 10, oder sonstiges Gestein, unterschiedlicher Körnung, Bitumen 11 und FT-Paraffine 12 in das Behältnis 5 eingegeben. Diese Bestandteile werden, wie ebenfalls schematisch dargestellt, durch ein Rührwerk, bestehend aus zwei gegenläufig arbeitenden Wellen 13, 14 miteinander verrührt. Aus dem Behältnis kann die so zubereitete Masse über einen Abfluß 15 ausgelassen werden. Die Verrührung erfolgt bei einer Temperatur von etwa 160° C.

Die Mischung besteht zu etwa 95 % aus Gestein und 5 % aus Bitumen. Darüber hinaus noch 5% FT-Paraffin, bezogen auf den 5-prozentigen Bitumen-Anteil.

Mitunter wird anstatt des Begriffs "PT-Paraffin" auch der Begriff "Hartwachs" oder "Hartparaffin" verwendet. Im Rahmen vorliegender Anmeldung wird auf durch die Fischer-Tropsch-Synthese gewonnenes Paraffin, was man mitunter auch als makrokristallines Paraffin bezeichnet, Bezug genommen. Es handelt sich vorzugsweise um langkettige Kohlenwasserstoffe mit Kettenlängen im Bereich von C30 bis C80, C90 oder C100.

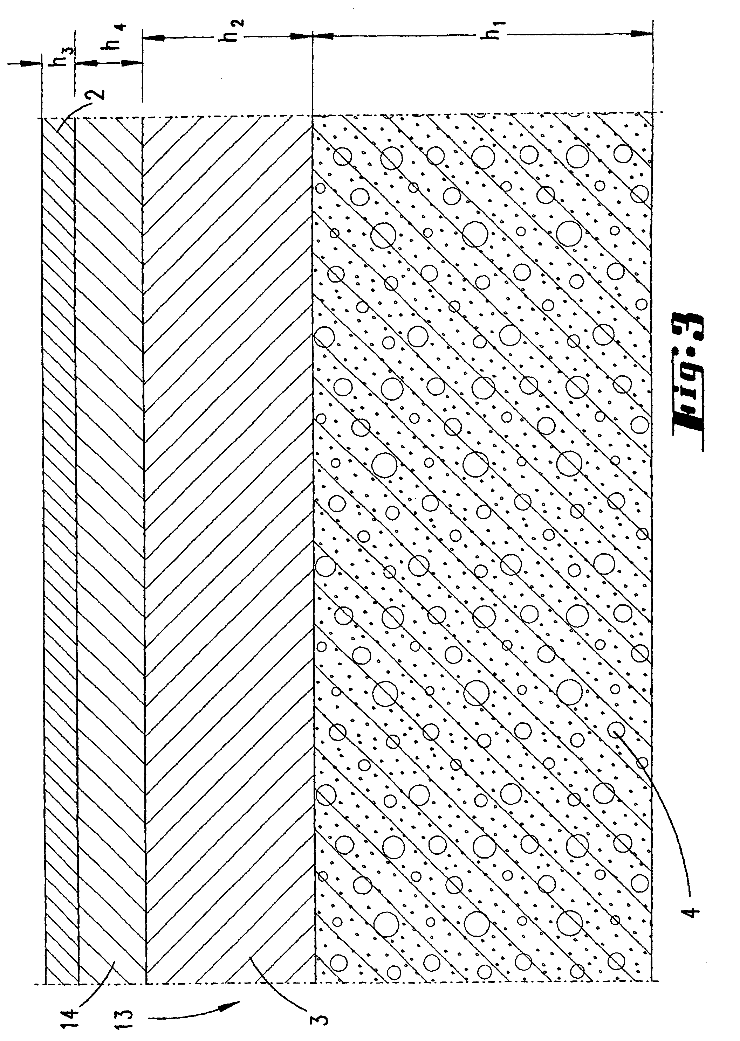

Mit Bezug zu Fig. 3 ist ein Straßenbelag 13 dargestellt, der aus einer Asphalt-Deckschicht 2, einer darunter befindlichen Asphalt-Binderschicht 14, einer bituminösen Tragschicht 3 und einer unteren Frostschutzschicht 4 besteht.

Während die Asphalt-Deckschicht 2, die bituminöse Tragschicht 3 und die Frostschutzschicht 4 einen Aufbau aufweisen, wie zuvor auch zu Fig. 1 erläutert, besitzt die Asphalt-Binderschicht 14 eine Höhe h4 von 4 bis 8 cm.

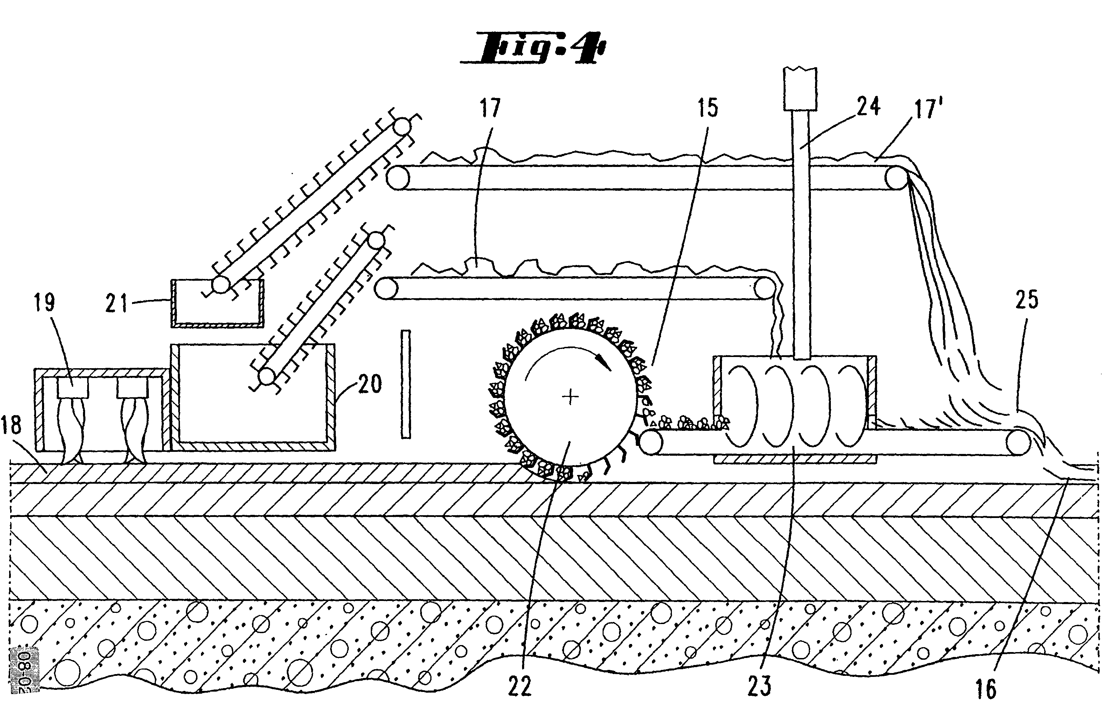

Mit Bezug zu Fig. 4 ist schematisch die Abtragung einer alten Straßenschicht, unter Gewinnung von Alt-Asphalt 15 und die Ausbildung eines neuen Straßenbelages 16 mit einem Anteil an Neu-Asphalt 17 und Alt-Asphalt 15 dargestellt.

Zunächst wird die alte Straßendecke 18 erwärmt, beim Ausführungsbeispiel durch Flammen von Brennern 19. Es sind weiter Behältnisse 20, 21 vorgesehen, mit welchen Neu-Asphalt hergestellt wird. Der Neu-Asphalt besitzt übliche Temperaturen im Bereich von 200 bis 250°. Die Erwärmung der alten Straßendecke 18 kann auch mit Abwärme aus der Erwärmung des Neu-Asphalts vorgenommen werden.

Weiter wird mit einer Fräse 22 die alte Straßendecke 18 abgetragen, unter Gewinnung von Brocken von Alt-Asphalt 15. Der Alt-Asphalt 15 wird einer Mischanlage 23 zugeführt, in welche auch Neu-Asphalt 17 eingebracht wird. Darüber hinaus kann der Asphalt 17' auch im Anschluß an die Mischanlage 23 noch beigegeben werden.

Weiter wird FT-Paraffin zugegeben, entweder bereits dem Neu-Asphalt in einem Behältnis 20 oder über eine eigene Zugabevorrichtung 24, zur Zugabe in der Mischanlage 23. Das schließlich gewonnene Asphalt 25 wird zur Ausbildung der neuen Straßendecke 16 auf den Untergrund aufgebracht.

## Patentansprüche

1. Bitumen oder Asphalt zur Herstellung von Straßenhelag, **gekennzeichnet durch** einen Anteil von **durch** eine Fischer-Tropsch-Synthese gewonnenem Paraffin (FT-paraffin).

2. Bitumen nach Anspruch 1, **dadurch gekennzeichnet, daß** der Anteil an FT-Paraffin 0,5 bis 10 % beträgt.

3. Bitumen nach einem der vorhergehenden Ansprüche, **dadurch gekennzeichnet, daß** das FT-Paraffin eine Schmelztemperatur (Erstarrungspunkt) von ca. 68 bis 105°C aufweist.

4. Bitumen nach einem der vorhergehenden Ansprüche, **dadurch gekennzeichnet, daß** das FT-Paraffin zumindest teilweise aus oxydiertem FT-Paraffin besteht.

5. Straßenbelag (1) bestehend aus einer unteren Sand-/Kies-Schicht (4), einer darüber befindlichen bituminösen Tragschicht (3) und einer oberen Asphaltbetonschicht oder Deckschicht (2), **dadurch gekennzeichnet, daß** das Bitumen der bituminösen Tragschicht (3) einen Anteil von durch Fischer-Tropsch-Synthese gewonnenem Paraffin (FT-Paraffin) aufweist.

6. Straßenbelag (1) nach Anspruch 5, **dadurch gekennzeichnet, daß** der Anteil an FT-Paraffin 0,5 bis 10 % (bezogen auf das Bitumen) beträgt.

7. Straßenbelag (1) nach einem der Ansprüche 5 bis 6, **dadurch gekennzeichnet, daß** die Deckschicht einen Anteil an FT-Paraffin aufweist.

8. Straßenbelag (1) nach einem der Ansprüche 5 bis 6, wobei eine Binderschicht vorgesehen ist, **dadurch gekennzeichnet, daß** die Binderschicht einen Anteil an FT-Paraffin aufweist.

9. Straßenbelag (1) nach einem der Ansprüche 5 bis 8 , **dadurch gekennzeichnet, daß** der Anteil an FT-Paraffin in der Deckschicht 0,5 bis 10 % (bezogen auf das Bitumen) beträgt.

10. Straßenbelag (1) nach einem der Ansprüche 5 bis 9, **dadurch gekennzeichnet, daß** das FT-Paraffin eine Schmelztemperatur (Erstarrungspunkt) von ca. 68 bis ca. 105°C aufweist.

11. Straßenbelag (1) nach einem der Ansprüche 5 bis 10, **dadurch gekennzeichnet, daß** das FT-Paraffin zumindest teilweise aus oxydiertem FT-Paraffin besteht.

12. Verfahren zur Herstellung eines Straßenbelages, **dadurch gekennzeichnet, daß** zur Ausbildung einer bituminösen Tragschicht im Straßenbau einem Bitumen enthaltenden Asphalt ein aus einer Fischer-Tropsch-Synthese gewonnenes Paraffin (FT-Paraffin) zugemischt wird, wobei das FT-Paraffin einen Anteil von 0,5 bis 10 %, vorzugsweise von 2,5 bis 7,5 %, bezogen auf den Bitumenanteil aufweist.

13. Verfahren nach Anspruch 12, **dadurch gekennzeichnet, daß** zur Ausbildung einer Deckschicht im Straßenbau einem Bitumen enthaltenden Asphalt FT-Paraffin in einem Anteil von 0,5 bis 5 % (bezogen auf das Bitumen) zugemischt wird.

14. Verfahren nach einem der Ansprüche 12 oder 13, wobei eine Binderschicht vorgesehen ist, **dadurch gekennzeichnet, dass** zur Ausbildung der Binderschicht einem Bitumen enthaltenden Asphalt FT-Paraffin in einem Anteil von 0,5 bis 10 % (bezogen auf das Bitumen) zugemischt wird.

15. Verfahren nach einem der Ansprüche 12 bis 14, **dadurch gekennzeichnet, daß** die Zugabe des FT-Paraffins zum flüssigen Bitumen in fester Form erfolgt.

16. Verfahren nach einem der Ansprüche 12 bis 15, daß das FT-Paraffin in Granulat, Pulver-, Flakes- oder Pastillenform oder flüssig zugemischt wird.

17. Verfahren nach einem der Ansprüche 12 bis 16, **dadurch gekennzeichnet, daß** das FT-Paraffin zumindest teilweise aus oxydiertem FT-Paraffin besteht.

18. Verwendung von mit FT-Paraffin versetztem Gußasphalt für Estriche, Brückenbeläge und Mastix und Asphaltschichten aller Art.

19. Verfahren zur Ausbildung einer Straßendecke mit Anteilen von Alt-Asphalt einer abgetragenen Straßendekke und mit Anteilen an Neu-Asphalt, wobei der Alt-Asphalt zunächst auf eine Temperatur erwärmt wird, die geringer ist als die Temperatur des Neu-Asphalts, und die Anteile von Alt-Asphalt und Neu-Asphalt sodann vermischt werden, **dadurch gekennzeichnet, daß** dem Neu-Asphalt, oder gegebenenfalls dem Alt-Asphalt, FT-Paraffin zugegeben wird.

20. Verfahren nach Anspruch 19, **dadurch gekennzeichnet, daß** das FT-Paraffin in einem Anteil von 0,1 bis 0,5 %, bezogen auf eine Einsatzmenge des Neu-Asphalts, beigegeben wird.

## Claims

1. Bitumen or asphalt for the production of road surfaces, **characterized by** a content of paraffin obtained by a Fischer-Tropsch synthesis (FT paraffin).

2. Bitumen according to Claim 1 or in particular according thereto, **characterized in that** the proportion of FT paraffin is 0.5% to 10%.

3. Bitumen according to one or more of the preceding claims or in particular according thereto, **characterized in that** the FT paraffin has a melting point (solidification point) from about 68 to 105°C.

4. Bitumen according to one or more of the preceding claims or in particular according thereto, **characterized in that** the FT paraffin at least partly comprises oxidized FT paraffin.

5. Road surface (1) consisting of a lower sand/gravel layer (4), a bituminous sub-base (3) over the sand/gravel layer, and an upper asphalt/concrete layer or pavement (2), **characterized in that** the bitumen of the bituminous sub-base (3) has a content of paraffin obtained by Fischer-Tropsch synthesis (FT paraffin).

6. Road surface (1) according to Claim 5 or in particular according thereto, **characterized in that** the proportion of FT paraffin is 0.5 to 10% (based on the bitumen).

7. Road surface (1) according to one or more of the preceding Claims 5 to 6 or in particular according thereto, **characterized in that** the pavement layer has a content of FT paraffin.

8. Road surface (1) according to one or more of the preceding Claims 5 to 6 or in particular according thereto, where a binder layer is provided, **characterized in that** the binder layer has a content of FT paraffin.

9. Road surface (1) according to one of more of the preceding Claims 5 to 8 or in particular according thereto, **characterized in that** the content of FT paraffin in the pavement layer is 0.5 to 10% (based on the bitumen).

10. Road surface (1) according to one or more of the preceding Claims 5 to 9 or in particular according thereto, **characterized in that** the FT paraffin has a melting point (solidification point) from about 68 to about 105°C.

11. Road surface (1) according to one or more of the preceding Claims 5 to 10 or in particular according thereto, **characterized in that** the FT paraffin at least partly comprises oxidized FT paraffin.

12. Method for the production of a road surface, **characterized in that**, in order to form a bituminous sub-base in roadbuilding, an asphalt-containing bitumen is admixed with a paraffin obtained from a Fischer-Tropsch synthesis (FT paraffin), where the FT paraffin has a content from 0.5 to 10%, preferably from 2.5 to 7.5%, based on the bitumen content.

13. Method according to Claim 12 or in particular according thereto, **characterized in that**, in order to form a pavement layer in roadbuilding, an asphalt-containing bitumen is admixed with FT paraffin in a proportion from 0.5 to 5% (based on the bitumen).

14. Method according to one of Claims 12 or 13, where a binder layer is provided, **characterized in that**, in order to form the binder layer, an asphalt-containing bitumen is admixed with FT paraffin in a proportion from 0.5 to 10% (based on the bitumen).

15. Method according to one of Claims 12 to 14 or in particular according thereto, **characterized in that** the FT paraffin is added to the liquid bitumen in solid form.

16. Method according to one of Claims 12 to 15 or in particular according thereto, **characterized in that** the FT paraffin is admixed in the form of granules, powder, flakes or pellets or in liquid form.

17. Method according to one of Claims 12 to 16 or in particular according thereto, **characterized in that** the FT paraffin at least partly comprises oxidized FT paraffin.

18. Use of mastic asphalt to which FT paraffin has been added, for screeds, bridge surfaces and mastics and asphalt layers of all types.

19. Method for the formation of a road surface containing used asphalt from a scraped-off road surface and containing fresh asphalt, where the used asphalt is initially heated to a temperature which is lower than the temperature of the fresh asphalt, and the used asphalt and fresh asphalt components are then mixed, **characterized in that** FT paraffin is added to the fresh asphalt or, optionally, to the used asphalt.

20. Process according to Claim 19 or in particular according thereto, **characterized in that** the FT paraffin is added in a proportion from 0.1 to 0.5%, based on the amount of fresh asphalt employed.

## Revendications

1. Bitume ou asphalte pour la fabrication de revêtement routier, **caractérisé par** une proportion de paraffine (paraffine FT) obtenue par une synthèse Fischer-Tropsch.

2. Bitume selon la revendication 1, **caractérisé en ce que** la proportion de paraffine FT est de 0,5 à 10%.

3. Bitume selon l'une ou plusieurs des revendications précédentes, **caractérisé en ce que** la paraffine FT présente une température de fusion (point de solidification) d'environ 68 à 105°C.

4. Bitume selon l'une ou plusieurs des revendications, **caractérisé en ce que** la paraffine FT est au moins partiellement formée de paraffine FT oxydée.

5. Revêtement routier (1) composé d'une couche inférieure de sable/gravier (4), d'une couche support (3) bitumineuse placée par dessus et d'une couche en béton à l'asphalte ou couche de couverture, supérieure (2), **caractérisé en ce que** le bitume de la couche support (3) bitumineuse présente une proportion de paraffine (paraffine FT) obtenue par une synthèse de Fischer-Tropsch.

6. Revêtement routier (1) selon la revendication 5, **caractérisé en ce que** la proportion de paraffine FT est de 0,5 à 10% (par rapport au bitume).

7. Revêtement routier (1) selon l'une ou plusieurs des revendications 5 à 6 précédentes, **caractérisé en ce que** la couche de couverture présente une proportion de paraffine FT.

8. Revêtement routier (1) selon l'une ou plusieurs des revendications 5 à 6 précédentes, où une couche de liant est utilisée, **caractérisé en ce que** la couche de liant présente une proportion de paraffine FT.

9. Revêtement routier (1) selon l'une ou plusieurs des revendications 5 à 8 précédentes, **caractérisé en ce que** la proportion de paraffine FT dans la couche de couverture est de 0,5 à 10% (par rapport au bitume).

10. Revêtement routier (1) selon l'une ou plusieurs des revendications 5 à 9 précédentes, **caractérisé en ce que** la paraffine FT présente une température de fusion (point de solidification) d'environ 68 à environ 105°C.

11. Revêtement routier (1) selon l'une ou plusieurs des revendications 5 à 10 précédentes, **caractérisé en ce que** la paraffine FT est formée au moins partiellement de paraffine FT oxydée.

12. Procédé de fabrication d'un revêtement routier, **caractérisé en ce que** pour réaliser une couche support bitumineuse dans une construction routière, on mélange à un asphalte contenant du bitume, une paraffine (paraffine FT) obtenue par une synthèse de Fischer-Tropsch, la paraffine FT représentant une proportion de 0,5 à 10%, de préférence de 2,5 à 7,5% par rapport à la fraction de bitume.

13. Procédé selon la revendication 12, **caractérisé en ce que** pour réaliser une couche de couverture en construction routière, on ajoute à un asphalte contenant un bitume, de la paraffine FT en une proportion de 0,5 à 5% (par rapport au bitume).

14. Procédé selon l'une des revendications 12 ou 13, dans laquelle une couche de liant est utilisée, **caractérisé en ce que** pour réaliser la couche de liant, on ajoute, à un asphalte contenant du bitume, une paraffine FT, en une proportion de 0,5 à 10% (par rapport au bitume).

15. Procédé selon l'une des revendications 12 à 14, **caractérisé en ce que** l'addition de la paraffine FT au bitume liquide se fait sous forme solide.

16. Procédé selon l'une des revendications 12 à 15, **caractérisé en ce que** la paraffine FT est incorporée sous forme de granulat, de poudre, de flocon, de pastille ou bien de liquide.

17. Procédé selon l'une des revendications 12 à 16, **caractérisé en ce que** la paraffine FT est au moins formée partiellement de paraffine FT oxydée.

18. Utilisation d'asphalte de coulée mélangé à de la paraffine FT, pour des chapes, des revêtements de pont et du mastic et des couches d'asphalte de tout type.

19. Procédé de réalisation d'un revêtement routier avec une proportion d'asphalte ancien du revêtement routier ayant été enlevée et avec une proportion d'asphalte neuf, l'asphalte ancien étant d'abord chauffé à une température inférieure à la température du nouvel asphalte et les proportions d'ancien asphalte et de nouvel asphalte étant ensuite mélangées, **caractérisé en ce que** l'on ajoute au nouvel asphalte ou bien le cas échéant à l'ancien asphalte de la paraffine FT.

20. Procédé selon la revendication 19, **caractérisé en ce que** la paraffine FT est ajoutée en une proportion de 0,5 à 10% par rapport à la quantité utilisée de nouvel asphalte.
